# EUROPEAN PATENT APPLICATION

(11) **EP 1 146 271 A2**
(43) Date of publication of application: **17.10.2001**
(21) Application number: 99952811.0
(22) Date of filing: 04.11.1999
(51) Int. Cl.: F16L 3/00

(54) **METAL PROTECTOR FOR THREADED EXTREMITIES OF WELL DRILLING TUBES**

(30) Priority: 11.12.1998 MX 9800357
(71) Applicant: Carrano Castro, Angel Gabriel Amadeo, Tejeria, Veracruz 91647 (MX)
(72) Inventor: Carrano Castro, Angel Gabriel Amadeo, Tejeria, Veracruz 91647 (MX)
(74) Representative: Elzaburu, Alberto de
(86) International application number: PCT/MX99/00032
(87) International publication number: WO 00/36322

(57) **Abstract**

This invention refers to metallic protectors for threaded ends of pipe joints. Used for drilling of oil, gas and geothermal wells, which protect the threads and seals of the assemblys joints from impact during transportation, handling and maneuvering in the wells, and at the same time they eliminate the use of the cardboard washer which is only used during the delivery of the product, and being the seal exposed to impacts during maneuvering performed in the wells, and considering that the cardboard, when it deteriorates, does not provide the same protection against impact, as steel provides.

## Description

### Description of the invention.

The invention refers to a metallic protector for threads and seals, fabricated with calibrated carbon steel plate, to be utilized as a protection against impact to which the pipe assembly joints are exposed to when it is transported, and within the well itself.

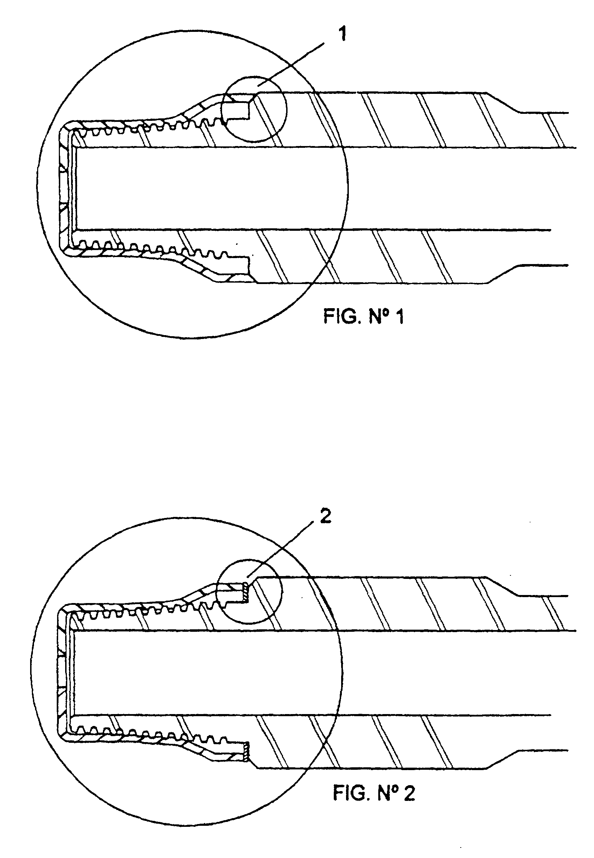

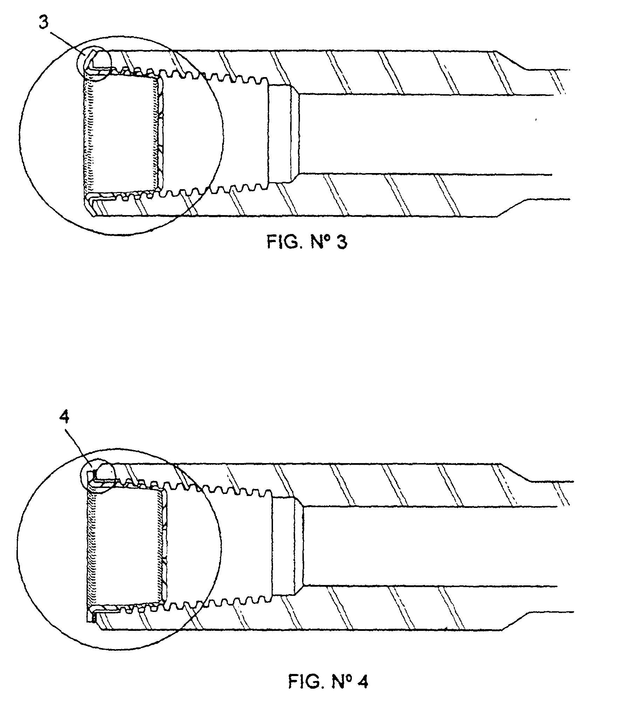

At the present time, there exist in the market metallic protectors which protect the thread and offer a partial protection to the seal of the drill pipe assembly joints, with a cardboard washer, as it is shown in Figure No. 2 (2) and Figure No. 4 (4). Therefore this product has been designed to offer protection to the joint seal, with simple innovations and at a low cost. At the same time this product eliminates the use of the compressed carboard washer which, is used nowadays, which will eliminate the cost of the same (washers) and the inconvenience that they are only of use for transportation, and are not able to be reused in the wells.

These protectors can be used in joints and tools with threads of class "IF", "NC", "REG", "FH", "XH" and all of those using a frontal seal.

As shown in Figure No. 1 (1), the innovation consists in sizing the dimension of the bell product in such a way. It will be almost equal to the external diameter of the joint, adding to it at the same time han internal bevel which will seat on the joint bevel.

This innovation consists in sizing the dimension of the edge of the product in such a manner, that it exceeds the diameter of the bevel, adding to it at the same time a seat profile equal to or similar with the degrees to which the bevel joint was machined, as it is shown in Figure No. 3 (3).

Having sufficiently described my invention, I consider it as a novelty and therefore I claim as of my exclusive property what is contained in the following clauses.

## Claims

1. Improvement by protecting the seal of the side pinion joint, by sizing the bell so it is almost equal to the joint diameter, and at the same time to fabricate a bevel equal to or, which resembles the angle of the bevel of the joint that it seats in.

2. Improvement by protecting the seal of the side box joint, by sizing the ring of the product in such a manner that it exceeds the minor diameter of the joint bevel, and at the same time to fabricate a profile equal to or, which resembles the angle of the bevel of the joint that it seats in.

## Amended claims

### Amended claims under Art. 19.1 PCT

**1.** A screw-on seal protector cap to protect the critical frontal hydraulic seal surface of the side pinion joint on a drill pipe assembly, by sizing the bell formed protector diameter so that it is almost equal to the outside diameter of the drill pipe adapter's joint diameter, with the lower edge of the bell having an inside bevel of approximately 45 degre relative to the axial center line of the protector cap and being equal to, or, resembling the angle of the bevel of the adapter joint that the bell bevel seats on, this bell shaped protector cap having internal contoured threads in a form and pitch equal to the external threads at the end of the pipe adapter having sufficient end play when assembled together to prevent seizure, and with an upper closed end having provision for accepting a torque tool device used to tighten and pre-stressing the axial length of the bell shaped protector cap between the threaded engagement of the cap and the drill pipe adapter and the inner bevel on the bell being in contact with the outer bevel adjacent to the critical planar circumferential hydraulic seal surface on the drill pipe adapter which is perpendicular to the center line axis of the drill pipe adapter.

**2.** A screw-on seal protector cap as claimed in claim 1 which is **characterised by** having an inner bevel surface being in contact with a mating beveled surface on the drill pipe adapter's outer diameter corner, which when being torqued and pre-stressed the axial loading deflects, relative to the applied torque, the beveled edge outward in the circumferential direction and away from the critical hydraulic seal surface at the load points between the two mating bevels, thus inducing a static spring force conditionwhich will preclude premature loosening and potential loss of the seal protector cap during thermal cycling and handling and transportation of the drill pipe assembly.

**3.** A screw-on seal protector cap as claimed in claims 1 and 2 which is **characterised by** that the axial spacing between the end of the threaded portion of the drill pipe adapter and the inner top surface of the seal protector cap function as an impact buffer to protect the rod end when exposed to axial loading or impact during handling, and having a feature incorporated into the cap design to minimize detrimental deformation of the end of the cap and internal buffer area as axial loading and impact is transfered along the axial direction through the cylindrical body of the cap which may move the cap a distance equal to the thread to thread clearance and where the induced force is absorbed at the lower inner bevel joint which will expand circumferentially and in the radial direction.

**4.** A screw-on seal protector cap as claimed in claims 1 to 3 which is **characterized by** that the inner bevel surface on the protector cap bell is in its pre-streesed condition seated on the external mating bevel of the drill pipe adapter and not on the critical hydraulic seal surface, which is adequately protected in the event of radial loading and impact on the bell formed section of the protector cap and in the vicinity of the bevel to bevel contact area, having sufficient strength to prevent the bell bevel to invade into the critical hydraulic seal surface by limiting local deformation and radial shift of the bell bevel during radial loading and impact conditions.

**5.** A screw-on seal protector cap as claimed in claims 1 to 4 which is **characterized by** that when the cap is provided with a large opening in the upper closed end of the cap it will have the capability, when properly screwed on the end of a drill pipe adapter, to provide for access into the into the pipe interior for the purpose of sand blasting and applying epoxy paint to the interior wall of the drill pipe and attached adapters and oven heat curing of the applied epoxy, while the critical external adapter end surfaces are protected.

**6.** A screw-on seal protector plug to protect the critical frontal hydraulic seal surface of the box side joint on a drill pipe assembly, by sizing the edge of the rolled over collar in such a manner that the collar edge exceeds the minor diameter of the adapter joint bevel, the rolled over plug collar edge having an inside bevel of approximately 45 degree relative to the axial center line of the protector plug or profile equal to, or, resembling the angle of the adapter joint bevel that the plug collar bevel seats on, this plug and collar shaped protector having external contoured threads in a form and pitch equal to the internal threads on the pipe adapter box joint and having sufficient end play when assembled together to prevent seizure, and with a lower closed end having provision for accepting a torque tool device used to tighten and pre-stressing the axial lenght of the plug and collar between the threaded engagement of the plug and the drill pipe adapter and the inner bevel of the collar being in contact with the outer bevel adjacent to the critical planar circumferential hydraulic seal surface on the drill pipe adapter, which is perpendicular to the center line axis of the drill pipe adapter.

**7.** A screw-on seal protector plug as claimed in claim 6 which is **characterized by** having an inner collar bevel surface being in contact with a mating beveled surface on the drill pipe adapter's outer diameter comer, which when being torqued and pre-stressed the axial loading deflects, relative to the appled torque, the beveled edge in the outward and circumferential direction and away from the critical hydraulic seal surface at the load points between the two mating bevels, thus inducing a static spring force condition which will preclude premature loosening and potentional loss of the seal protector plug during thermal cycling and handling of the drill pipe assembly.

**8.** A screw-on seal protector plug as claimed in claims 6 and 7 which is **characterized by** having an incorporated radius shaped horizontal surface of the plug's rolled over collar as opposed to a flat horizontal surface, being such shaped having geatly improved strenght and creating an inner void and axial spacing between the inner surface of the plug collar and the critical hydraulic seal surface at the end of the drill pipe adaptor which will function as an impact buffer to protect the horizontal hydraulic seal surface from axial and radial loading and impact, as loading and impact force may move the plug body in the axial direction by a distance equal to the thread to thread clearance, and where the induced force is absorbed by the two beveled joints between the plug collar and the drill pipe adapter, where the bevel on the plug collar edge will deflect in the radial and circumferencial directions and away from the critical hydraulic seal surface,

**9.** A screw-on seal protector plug as claimed in claims 6 to 8 is **characterized by** that when the protector plug is provided with a large opening in the lower closed end of the plug having the capability to, when properly screwed on to the end of the drill pipe adapter, provides for access into the pipe interior for the purpose of sand blasting and applying epoxy to the interior wall of the drill pipe and the attached adapters, while the critical external adapter end surfaces are protected.

Statement under Art. 19.1 PCT
**1.** The following items add writen information to particular details in figure 1 and 3, and the description, which are not adequately identified.

**2.** Claim 1 identify the location of the hydraulic seal surface of the pinion adapter, the relative location of the adapter bevel to this seal surface, and radial and axial clearances between the external threads on the adapter rod and the internal threads on the seal protector cap

**3.** Claim 2 identify, the torqued induced stress and deflection of the cap lower edge with the incorporated inner bevel, which when in contact with the adapter bevel creates a static spring load, to preclude premature loosening and potential loss of the protector cap.

**4.** Claim 3 identify the inner loading and impact buffer area on the top portion of the cap, and the mechanism of axial load transfer and absorption at the lower edge and bevel of the protector cap

**5.** Claim 4 identify the mechanism of load and impact absorption in the pre-stressed cap edge bevel to adapter bevel areas from radial loading and impact forces

**6.** Claim 5 identify the permitted access into the interior of the drill pipe assembly through a penetration in the top surface of the cap, for the purpose of applying sand blasting and epoxy paint to the interior, while hydraulic seal surface protection is provided during this process.

**7.** Claim 6 identify the location of the hydraulic seal surface of the box adapter, the relative location of the adapter bevel to this seal surface, and radial and axial clearances between the internal threads in the box adapter and the external threads on the seal protector plug.

**8.** Claim 7 identify the torque induced stress and deflection of the plug collar outer edge with the incorporated inner bevel, which when in contact with the adapter bevel creates a static spring load, to preclude premature loosening and potential loss of the seal protector plug.

**9.** Claim 8 identify the inner loading and impact buffer on the plug, and the mechanism of axial and radial load transfer and absorption at the plug collar edge and inner bevel.

**10.** Claim 9 identify the permitted access into the interior of the drill pipe assembly through a penetration in the bottom surface of the plug, for the purpose of applying sand blasting and epoxy paint to the interior, while hydraulic seal surface protection is provided during this process.
